# EUROPÄISCHE PATENTSCHRIFT

(11) **EP 3 864 342 B1**
(45) Veröffentlichungstag und Bekanntmachung des Hinweises auf die Patenterteilung: **15.03.2023**
(21) Anmeldenummer: 19786748.4
(22) Anmeldetag: 08.10.2019
(51) Int. Cl.: F21S 41/143, F21S 41/265, F21S 41/275, G02B 3/00, G02B 19/00, B60Q 1/14, F21S 41/153, F21S 41/663

(54) **FERNLICHTSCHEINWERFER**
HIGH-BEAM HEADLIGHT
PROJECTEUR DE FEU DE ROUTE

(30) Priorität: 09.10.2018 DE 102018217213
(43) Veröffentlichungstag der Anmeldung: 18.08.2021
(73) Patentinhaber: Fraunhofer-Gesellschaft zur Förderung der angewandten Forschung e.V., 80686 München (DE)
(72) Erfinder: SCHREIBER, Peter, 07745 Jena (DE); LI, Chen, 07745 Jena (DE); MICHAELIS, Dirk, 07745 Jena (DE); WÄCHTER, Christoph, 07745 Jena (DE); FISCHER, Stephanie, 07745 Jena (DE)
(74) Vertreter: Schenk, Markus
(86) Internationale Anmeldenummer: PCT/EP2019/077216
(87) Internationale Veröffentlichungsnummer: WO 2020/074508

(56) Entgegenhaltungen:
- EP-A1- 3 258 164
- EP-A2- 0 999 407
- WO-A1-2017/066817
- DE-A1-102014 223 933
- DE-A1-102015 208 183
- DE-B3-102016 112 617
- US-A1- 2017 241 607

## Beschreibung

Die vorliegende Anmeldung betrifft ein Fernlichtscheinwerfer wie z. B. ein Fernlicht zum Verbau in ein Fahrzeug.

Kraftfahrzeug-Fernlichtscheinwerfer erzeugen ein stark gebündeltes Fernfeld mit einer Halbwertsbreite der Winkelverteilung der Lichtstärke von ca. 5°. Zur Vermeidung der Blendung entgegenkommender bzw. vorausfahrender Fahrzeuge muss das Fernlicht gegebenenfalls abgeschaltet und nur das Abblendlicht genutzt werden. Durch eine Segmentierung des Fernlichts in individuell schaltbare vertikale Streifen mit einer horizontalen Breite von weniger als 2° ist ein blendfreier Betrieb nur durch Ausschalten der jeweils blendenden Segmente und so eine bessere Ausleuchtung der Fahrbahn möglich.

Als Lichtquelle dient ein auf einer Leiterplatte montiertes LED-Array. Die nichtstrahlenden Bereiche zwischen den einzelnen LEDs werden durch eine spezielle Lichtleiter- oder Reflektorfülloptik ausgeblendet. Gleichzeitig ermöglicht diese Optik eine geringfügige Divergenzverringerung der Abstrahlung des LED-Arrays. Der Ausgang der Fülloptik wird durch eine langbrennweitige Projektionsoptik mit vergleichsweise großer Baulänge auf die Straße nach Unendlich abgebildet. Die Realisierung der Fülloptik stellt auf Grund der hohen Temperatur und optischen Leistungsdichten in nächster Nähe des LED-Arrays hohe Anforderungen an Materialien und Fertigungsverfahren. Weiter ist zur Unterdrückung von Farbsäumen der Lichtsegmente eine achromatisch korrigierte Projektionsoptik erforderlich. Die Gesamtlänge der Optik ergibt sich aus der Summe der Schnittweite der Projektionsoptik und Länge der Fülloptik und resultiert in großen Systemabmaßen.

Zur Abbildung des Lichts eines Arrays aus Laserdioden ist eine Anordnungen von Mikrolinsen bekannt, DE 10 2015 208 183 A1, gemäß welcher zwei Mikrolinsen-Anordnungen derart nacheinander angeordnet sind, dass die Mikrolinsen der zwei Anordnungen jeweils funktionale Paare bilden, wodurch aber das Problem der großen Systemabmaßen nicht gelöst wird.

Es besteht folglich der Bedarf nach einem Fernlicht bzw. Fernlichtscheinwerfer, das bzw. der bei geringer Baulänge eine hohe Lichtausbeute liefert und eine effiziente Herstellbarkeit ermöglicht.

Die Aufgabe der vorliegenden Erfindung besteht deshalb darin, ein Fernlicht bzw. einen Fernlichtscheinwerfer zu schaffen, das bzw. der diese Bedingungen erfüllt. Diese Aufgabe wird durch den Gegenstand des unabhängigen Patentanspruchs gelöst.

Ein Kerngedanke der vorliegenden Anmeldung besteht darin, dass es möglich ist, ein Fernlicht bzw. einen Fernlichtscheinwerfer zu schaffen, das bzw. der mit einer geringen Baulänge mit hoher Effizienz herstellbar ist, und zwar auch eine effektive kostengünstige Herstellbarkeit ermöglicht, indem ein Lichtquellenarray mit einer Mehrzahl von Lichtquellen mit einem Wabenkondensor kombiniert wird. Ein Kollimator, der zwischen dem Wabenkondensor und das Lichtquellenarray geschaltet ist, leuchtet den Wabenkondensor mit kollimiertem Licht der Mehrzahl von Lichtquellen des Lichtquellenarrays aus. Die Anordnung der Komponenten ist so, dass das kollimierte Licht einer ersten Lichtquelle zu einer übersprechfreien Durchstrahlung des Wabenkondensors und einer Ausleuchtung eines ersten Fernfeldsegments führt. Für jede der zumindest einen zweiten Lichtquelle des Lichtquellenarrays führt das kollimierte Licht der jeweiligen zweiten Lichtquelle zu einer Durchstrahlung des Wabenkondensors mit Kanalübersprechen und einer Ausleuchtung eines schräg zu dem ersten Fernfeldsegment ausgerichteten zweiten Fernfeldsegments. In anderen Worten ausgedrückt, sind die eine oder mehreren zweiten Lichtquellen so angeordnet, dass ihr kollimiertes Licht bei Durchtreten eintrittsseitiger Wabenlinsen bzw. Lenslets des Wabenkondensors nicht in die jeweils zugeordneten austrittsseitigen Wabenlinsen bzw. Lenslets des Wabenkondensors gebündet werden, mit denen sie einen jeweiligen Kanal bilden, sondern in die austrittsseitigen Wabenlinsen bzw. Lenslets eines anderen Kanals, wie z. B. des Nachbarkanals, was einer ersten Übersprechordnung entspräche, oder aber eines übernächsten Kanals, was einer zweiten Übersprechordnung entspräche usw. Bei Einhaltung von Akzeptanzwinkeln der austrittsseitigen Lenslets sorgt die Wabenkondensorausgestaltung automatisch für eine nahtlose Aneinanderfügung der den Lichtquellen des Lichtquellenarrays zugeordneten, weil durch sie ausgeleuchteten Fernfeldsegmente. Somit ist es möglich, bei individueller oder gruppenmäßiger Ansteuerbarkeit der Lichtquellen des Lichtquellenarrays ein segmentiertes Fernlicht zu erhalten bzw. ein Fernlicht, bei dem gewünschte Segmente an- bzw. ausgeschaltet sind oder aber bei entsprechender Ansteuerbarkeit der Lichtquellen stärker oder weniger stark ausgeleuchtet sind.

Bevorzugte Ausführungsbeispiele der vorliegenden Anmeldung werden nachfolgend Bezug nehmend auf die Zeichnungen näher erläutert. Es zeigen:
- Fig. 1: eine schematische Draufsicht eines Fernlichts bzw. Fernlichtscheinwerfers gemäß einem Ausführungsbeispiel, nämlich entlang der Horizontalen betrachtet;
- Fig. 2: eine schematische Seitenschnittansicht des Fernlichts bzw. Fernlichtscheinwerfers von Fig. 1, entlang der Vertikalen betrachtet; und
- Fig. 3: eine schematische Raumdarstellung des Wabenkondensors von Fig. 1 und 2.

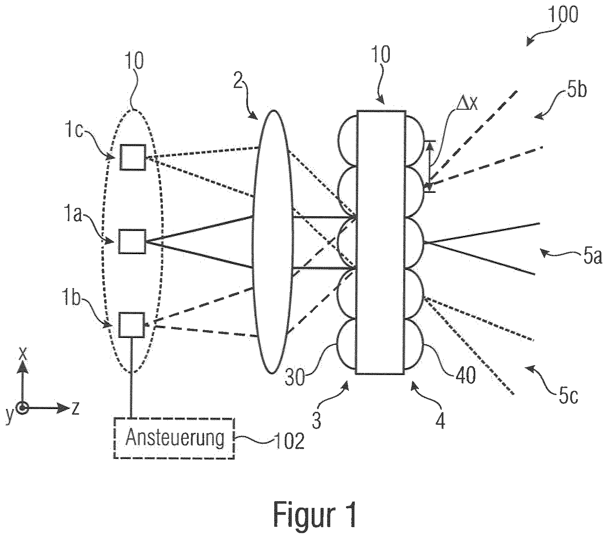

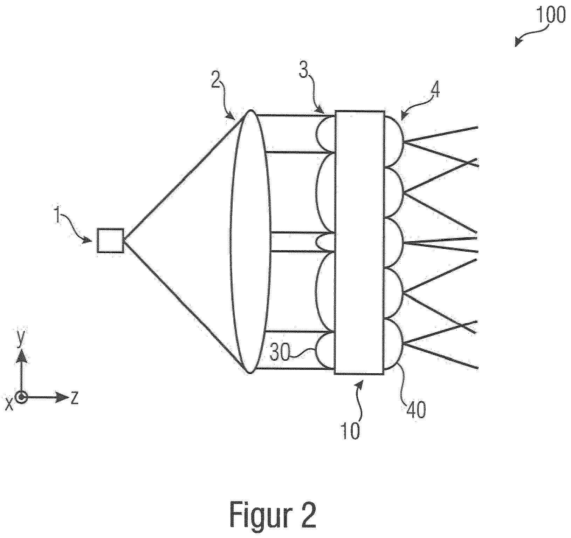

Die prinzipielle Anordnung ist in Figur 1 als Draufsicht und in Figur 2 als Seitenansicht dargestellt. Als Lichtquelle dient ein linearer LED-cluster 1 mit einer gemeinsamen Kollimationsoptik 2. Die Strahlformungsoptik besteht aus einem in vertikaler Richtung irregulären, in horizontaler Richtung regulärem Wabenkondensor [1] mit rechteckigen Lenslets. Der Wabenkondensor wird als Tandemarray bestehend aus einem irregulären Eingangsarray 3 und einem regulärem Ausgangsarray 4 aufgebaut. Die Irregularität des Eingangsarrays besteht nur in der Vertikalen.

Ist nur die zentrale LED 1a eingeschaltet, bilden alle Eingangslenslets diese LED nur auf das jeweils zugeordnete Ausgangslenslet ab und realisieren so einen Beleuchtungsstrahlengang mit Köhlerscher Beleuchtung in jedem Arraykanal. In Figur 1 ist der Übersichtlichkeit halber nur der Strahlengang im zentralen Eingangslenslet dargestellt. Die Ausgangslenslets bilden wiederum die Aperturen der zugeordneten Eingangslenslets nach Unendlich ab und erzeugen so das zentrale Fernfeldsegment 5a des Fernlichts. Durch die vertikale Irregularität des Eingangsarrays erhält man in der Vertikalen eine annähernd symmetrische, glockenförmige, in der Horizontalen aber eine rechteckige Tophat-Winkelverteilung der Lichtstärke des Segments.

Werden die der zentralen LED in Lichtausbreitungsrichtung rechts 1b oder links 1c benachbarten LEDs aktiviert, bilden die Eingangslenslets diese auf das Ausgangslenslet im jeweils links oder rechts benachbarten Kanal ab. In Figur 1 ist der Übersichtlichkeit halber wieder nur der Strahlengang für in das zentrale Eingangslenslet einfallende Bündel dargestellt. Dieses Kanalübersprechen führt zur Ausbildung der dem zentralen Fernfeldsegment in Fahrtrichtung links 5b und rechts 5c benachbarten Segmente. Noch weiter von der zentralen LED entfernte, der Übersichtlichkeit halber nicht dargestellte, LEDs bewirken ein Kanalübersprechen hin zum übernächsten oder einen noch weiter entfernten Kanal und erlauben so die Ausleuchtung noch weiter von der optischen Achse des Systems entfernter Fernfeldsegmente.

Die Ausbildung des Eingangslinsenarrays als irreguläres Array mit hohem Füllfaktor garantiert den lückenlosen Anschluss der Segmente und macht den Einsatz einer speziellen Fülloptik überflüssig. Die LEDs des Arrays sind so angeordnet, dass unter Berücksichtigung der Verzeichnung des Kollimators jeweils nur das gewünschte Kanalübersprechen aber keine Lichtanteile in anderen Kanälen erzeugt wird. Da die Blendenzahlen der Lenslets mit typischerweise f/#>10 vergleichsweise groß sind, treten nur minimale Aberrationen auf und eine Achromatisierung der Projektion ist nicht erforderlich. Durch individuelle Ansteuerung der LEDs kann neben der blendfreien Ausleuchtung auch ein horizontales Lichstärkeprofil des Fernlichts eingestellt werden, welches z.B. einen stromsparenden Betrieb ermöglicht.

in anderen Worten ausgedrückt zeigen obige Figuren ein Fernlicht bzw. einen Fernlichtscheinwerfer 100 mit einem Lichtquellenarray 1 mit einer Mehrzahl von Lichtquellen 1a-1c, wobei allerdings die Anzahl wie bereits erwähnt nicht auf drei begrenzt ist, sondern zwei oder höher sein kann. Ferner umfasst das Fernlicht 100 einen Wabenkondensor 10 und einen Kollimator 2, der zwischen dem Wabenkondensor 10 und das Lichtquellenarray 1 geschaltet ist, um den Wabenkondensor 10 mit kollimiertem Licht der Mehrzahl von Lichtquellen 1a-1c auszuleuchten. Letztere sind, wie bereits oben erwähnt, möglicherweise einzeln ansteuerbar oder in Gruppen ansteuerbar, so dass ein segmentiertes Fernlicht entsteht, wie es oben beschrieben wurde. Die Ansteuerbarkeit wird von einer optional zum Scheinwerfer 100 gehörigen Ansteuerschaltung 102 realisiert und kann sich in einer Ein- und Ausschaltbarkeit erschöpfen, könnte aber auch eine Leuchstärkeregelung beinhalten. Die Lichtquellen 1a-1c liegen in der Brenn oder Fokalebene des Kollimators 2.

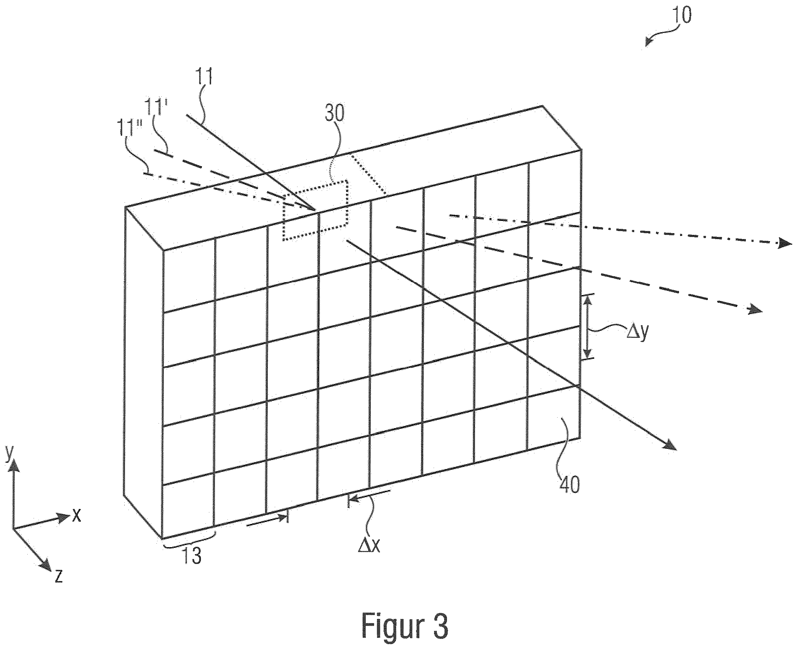

Insbesondere existiert unter den Lichtquellen eine Lichtquelle 1a, die nicht notwendigerweise die mittlere in der Fokalebene des Kollimators 2 unter den Lichtquellen des Lichtquellenarrays 1 sein muss. Diese Lichtquelle 1a führt über den Kollimator 2 zu kollimiertem Licht, das zu einer übersprechfreien Durchstrahlung des Wabenkondensors 10 führt. Für jede andere Lichtquelle, hier 1b und 1c, führt das jeweilige kollimierte Licht zu einer Durchstrahlung des Wabenkondensors 10 mit Kanalübersprechen. In anderen Worten ausgedrückt, ist der Wabenkondensor 10 eintrittsseitig mit einem Wabenlinsenarray 3 und austrittsseitig mit einem Wabenlinsenarray 4 ausgestattet. Jede eintrittsseitige Wabenlinse bzw. eintrittsseitiges Lenslet 30 des Eingangsarrays 3 ist einem jeweiligen austrittsseitigen Lenslet bzw. einer austrittsseitigen Wabenlinse 40 des Ausgangsarrays 4 zugeordnet, um zusammen einen Kanal zu bilden, indem erstgenannte das kollimierte Licht der Lichtquelle 1a in diese zugeordnete austrittsseitige Wabenlinse 40 bündelt. Dazu sind die Ausgangslenslets 40 in einem der Brennweite der Eingangslenslets 30 befindlichen Abstand zu letzteren angeordnet und umgekehrt die Eingangslenslets 30 in einem Abstand der Brennweite der Ausgangslenslets 40 zu letzteren und außerdem sind die Eingangslenslets und Ausgangslenslets regelmäßig mit einem konstanten Wiederholabstand Δx zueinander angeordnet. In Fig. 1-3 wurde der exemplarische Fall dargestellt, dass das kollimierte Licht der Lichtquelle 1a senkrecht auf den Wabenkondensor 10 trifft, in welchem Fall Linsenöffnungen und Linsenscheitel eines einander zugeordneten Paars von Eingangslenslet 30 und Ausgangslenslet 40 entlang der horizontalen Richtung x exakt zueinander ausgerichtet sind, aber ein alternatives Ausführungsbeispiel wäre ebenfalls denkbar. In Fig. 3, das lediglich exemplarisch zeigt, dass der Wabenkondensor 10 möglicherweise 40 Kanäle aufweist, ist exemplarisch ein Lichtstrahl 11 des kollimierten Lichts der Lichtquelle 1a gezeigt, das auf ein bestimmtes Eintrittslenslet 30 trifft, um aus dem zugeordneten Austrittslenslet 40 wieder auszutreten. Der Strahl 11 verläuft quasi in einem Kanal des Wabenkondensors 10. Mit gestrichelten Linien 11' zeigt Fig. 3 das kollimierte Licht einer der anderen Lichtquellen, wie es auf das gleiche Eingangslenslet 30 trifft, aber dann durch ein anderes Ausgangslenslet 40 austritt. Das Ausgangslenslet, durch das Lichtstrahl austritt, ist ein zu dem Ausganslenslet benachbartes Ausgangslenslet, durch welches der Lichtstrahl 11 der Lichtquelle 1a trat. Dies wurde im Vorhergehenden als erste Übersprechordnung bezeichnet. Mit 11" zeigt Fig. 3 mit einer Strichpunktlinie einen von einer wiederum anderen Lichtquelle stammenden Lichtstrahl, der durch das gleiche Eingangslenslet 30 wie die anderen Strahlen 11 und 11' tritt, aber durch ein wiederum anderes Ausgangslenslet 40 austritt, das in diesem Fall von dem Ausgangslenslet, durch das der Lichtstrahl 11 verläuft, d. h. der der Lichtquelle 1a, um ein Ausgangslenslet beabstandet ist, d. h. einen übernächsten Nachbar im Ausgangsarray 4 darstellt. Dies wird dann als zweite Übersprechordnung bezeichnet. Weitere, andere und höhere Übersprechordnungen wären denkbar.

Bei den vorhergehend beschriebenen Ausführungsbeispielen waren die Lichtquellen 1a-1c entlang einer eindimensionalen Linie angeordnet, hier entlang der Horizontalen x. Abweichende Ausführungsbeispiele, in welchen die Lichtquellen anders angeordnet sind, wie z. B. auch zweidimensional, wären aber ebenfalls denkbar. Aus der eindimensionalen Anordnung der Lichtquellen 1 resultiert, dass das kollimierte Licht der "anderen" Lichtquellen 1b und 1c, d. h. derjenigen Lichtquellen, die zu einem Kanalübersprechen führen, zu einem spaltenweisen Kanalübersprechen führen. Der Wabenkondensor 10 und dessen Eingangs- und Ausgangsarrays 3 und 4 weisen somit Spalten 13 von Lenslets 30 bzw. 40 auf, die jeweils gleich bzw. identisch gebildet sind und in einem bestimmten Wiederholabstand entlang der Richtung x nebeneinander angeordnet sind bzw. durch Translation in Vielfachen des Wiederholabstandes konform ineinander übergehen. Somit entspricht jedes einen Kanal bildende Paar von Eingangs- und Ausgangslenslet 30 und 40 in einer Spalte einem Paar in jeder anderen Spalte, nämlich dem in der gleichen Zeile des Arrays 3 bzw. 4 und ein Kanalübersprechen bedeutet, dass das Licht eines Eingangslenslets 30 nicht in sein zugeordnetes Ausgangslenslet 40 in der gleichen Spalte 13, sondern in Ausgangslenslet 40 des entsprechenden Paars von Eingangs- und Ausgangslenslet 30 und 40 in einer anderen Spalte 13 gebündelt wird, wie z.B. der Nachbarspalte im Fall der ersten Übersprechordnung usw.

Die Ausgangslenslets 40 bilden auch innerhalb jeder Spalte 13 ein regelmäßiges Array in der Richtung y. In anderen Worten ausgedrückt, bildete bei den vorhegehenden Ausführungsbeispielen das Array von Ausgangslenslets 40 ein regelmäßiges Array mit konstantem Wiederholabstand Δx in x und konstantem Wiederholabstand Δy in y. Die Linsenöffnungen der Ausgangslenslets 40 sind rechteckig und lückenlos aneinandergefügt. In jeder Spalte 13 weisen jedoch die Eingangslenslets 30 Linsenöffnungen mit unterschiedlicher Größe auf. Die Linsenöffnungsvariation betrifft die Ausdehnung der Linsenöffnungen in der y Richtung, wie es in Fig. 2 gezeigt ist. Dennoch bündelt jedes Eingangslenlet 30 das in dasselbe einfallende kollimierte Licht der Lichtquelle 1a in das Zentrum seines zugeordnetes Ausgangslenslet 40. In jeder Spelte 13 können eine oder mehrere der Eingangs- und/oder Ausgangslenlenslets 30 und 40 einen zu ihrer Linsenöffnung entlang der y Richtung dezentrierten Linsenscheitel aufweisen. Denzentrierungen und Linsenöffungsvariation dienen der Erzielung einer gewünschten Leuchtstärkewinkelverteilung in der Richtung y, mit welcher die Segment 5a - 5c ausgeleuchtet werden. Hier wurde die Winkelverteilung breiter mit einem Peak bei einem vorbestimmten Winkel bzw. senkrecht nach vorne, indem manche Eingangslenslets 30 gegenüber ihrem zugeordneten Ausgangslenslet 40 eine größere Linsenöffnungsausdehnung in y aufweisen, bei gegenseitig in y ausgerichteter und jeweils zu ihrer Linsenöffnung zentrierter Lage des Linsenscheitels. Andere Ausführungen wären ebenfalls denkbar.

Der Fernlichtscheinwerfer 100 ermöglicht somit das individuelle Ausleuchten von Fernlichtsegmenten 5a, 5b and 5c. Gemäß der eindimensionalen Nebeneinanderanordnung der Lichtquellen 1a - 1c fächern die Fernfeldsegmente entlang Raumrichtung x auseinander. Sie grenzen aber nahtlos aneinander. Wie oben erwähnt können die eintrittsseitigen Lenslets 30 leicht vor-defokussiert sein, um über alle vorkommenden Übersprechordnungen hinweg (wobei kein Kanalübersprechen der nullten Ordnung entspräche), eine im Mittel bessere Fokussierung zu ermöglichen. Die eintrittsseitigen Wabenlinsen des eintrittsseitigen Wabenlinsenarrays 3 des Wabenkondensors 10 können also gegenüber einer Ebene, in welcher die austrittseitigen Wabenlinsen 40 des austrittsseitigen Wabenlinsenarrays 4 des Wabenkondensors 10 angeordnet sind, für das kollimierte Licht der ersten Lichtquelle 1a defokussierter angeordnet sein als für kollimiertes Licht mit einer Kollimationsrichtung zwischen derjenigen des kollimierten Lichts dieser Lichtquelle 1a und derjenigen des kollimierten Lichts einer solchen anderen Lichtquelle mit unter den Lichtquellen maximaler Übersprechordnung, d.h. Lichtquelle 1b oder 1c im Fall von Fig. 1. Effektiv lägen also in Fig. 1 beispielsweise die Ausgangslenslets 40 ein wenig näher an den Einganslenslets als sie es für eine übersprechfreie Durchstrahlung optimaler Weise täten, aber auch weiter weg als es für die zu kanalübersprechende Durchstrahlung durch eine der Lichtquellen 1b und 1a optimaler Weise täten.

Durch die mikrooptische Realisierung als Multiapertursystem zur Strahlformung ist eine Verringerung der Baulänge verglichen mit herkömmlichen Systemen möglich. Die mikrooptische Strahlformung macht eine separate Fülloptik und die achromatische Korrektur der Projektionsoptik überflüssig. Gegenüber projizierenden Systemen mit Diaarrays oder Blenden wird eine erhöhte Systemtransmission erreicht.

Einsetzbar sind obige Ausführungsbeispiele als Kfz-Fernlicht, aber auch allgemein als schaltbare Punktscheinwerfer. Zweidimensionale, variable Ausleuchtungen größerer Bereiche mit rechteckigen Pixeln wären realisierbar.

Obige Ausführungsbeispiele beschreiben demnach in anderen Worten ausgedrückt unter anderem ein segmentiertes Fernlicht mit Multiaperturoptik. Dabei wird beschrieben, dass das segmentiertes Fernlicht ein kollimiertes Lichtquellenarray und einen nachfolgenden Wabenkondensor zur Strahlformung aufweist, wobei ein beispielsweise zentrales Element des Lichtquellenarrays, bzw. eine zentrale Lichtquelle, eine senkrechte Durchstrahlung des Wabenkondensors, alle anderen Elemente aber eine schräge Durchstrahlung und so einen definiertes Kanalübersprechen erzeugen. Eine Ausbildung des Lichtquellenarrays als eindimensionale, lineare Anordnung mehrerer Emitter wurde exemplarisch gezeigt. Die Kollimation des Lichtquellenarrays kann wie gezeigt durch einen asphärische Linse erfolgen. Alternativ ist auch eine Kollimation des Lichtquellenarrays durch eine zweilinsige Anordnung bestehend aus Feldlinse und Kollimationsasphäre möglich. Der Wabenkondensor kann wie gezeigt als in vertikaler Richtung y irregulärer und in horizontaler Richtung regulärer Wabenkondensor mit rechteckigen Lenslets gebildet sein. In Fig. 2 wurde der Wabenkondensor durch ein in vertikaler Richtung irreguläres Eingangslinsenarray rechteckiger Lenslets und ein reguläres Ausgangsarray rechteckiger Lenslets gebildet. Möglich ist auch, dass der Wabenkondensor ein Ausgangslinsenarray aufweist, das auch in vertikaler Richtung dezentrierte Linsensegmente aber mit konstanter vertikaler Ausdehnung der Linsenaperturen enthält. Der Wabenkondensor kann als monolithisches Tandemarray ausgebildet sein. Durch individuelle Ansteuerung der LEDs ist eine blendfreie Lichtstärkeverteilung erzielbar.

### Literatur

[1] C. Li, P. Schreiber, D. Michaelis, Ch. Wächter, St. Fischer, U. D. Zeitner: "Etendue conserving light shaping using microlens arrays with irregulär lenslets", SPIE 10693 (2018) 1069304.

## Patentansprüche

1. Fernlichtscheinwerfer mit
einem Lichtquellenarray (1) mit einer Mehrzahl von Lichtquellen (1a, 1b, 1c);
einem Wabenkondensor (10) aufweisend ein eintrittsseitiges und ein austrittsseitiges Wabenlinsenarray (3,4);
einem Kollimator (2), der zwischen den Wabenkondensor und das Lichtquellenarray geschaltet ist, zum Ausleuchten des Wabenkondensors mit jeweiligem kollimiertem Licht der Mehrzahl von Lichtquellen,
wobei das Lichtquellenarray eine erste Lichtquelle (1a) und zumindest eine zweite Lichtquelle (1b) aufweist,
wobei jeder eintrittsseitigen Wabenlinse des eintrittsseitigen Wabenlinsenarrays (3) des Wabenkondensors eine austrittseitige Wabenlinse des austrittsseitigen Wabenlinsenarrays (4) des Wabenkondensors zugeordnet ist, in welche das kollimierte Licht der ersten Lichtquelle (1a) durch die jeweilige eintrittsseitige Wabenlinse gebündelt wird, um zusammen einen Kanal des Wabenkondensors zu bilden, **dadurch gekennzeichnet, dass**
für jede der zumindest einen zweiten Lichtquelle das kollimierte Licht der jeweiligen zweiten Lichtquelle (1b) durch das eintrittsseitige Wabenlinsenarray (3) des Wabenkondensors kanalübersprechend in die austrittseitigen Wabenlinsen des austrittsseitigen Wabenlinsenarrays (3) gebündelt wird, so dass das kollimierte Licht der ersten Lichtquelle (1a) des Lichtquellenarrays (1) zu einer übersprechfreien Durchstrahlung des Wabenkondensors und einer Ausleuchtung eines ersten Fernfeldsegmentes (5a) führt und für jede der zumindest einen zweiten Lichtquelle (1b) das kollimierte Licht der jeweiligen zweiten Lichtquelle (1b) zu einer Durchstrahlung des Wabenkondensors mit Kanalübersprechen und einer Ausleuchtung eines schräg zu dem ersten Fernfeldsegment (5a) ausgerichteten zweiten Fernfeldsegmentes (5b) führt.

2. Fernlichtscheinwerfer gemäß Anspruch 1, bei dem die Lichtquellen des Lichtquellenarrays (1) einzeln oder in Untergruppen ansteuerbar sind.

3. Fernlichtscheinwerfer gemäß Anspruch 1, bei dem das Lichtquellenarray (1) als eindimensionales Lichtquellenarray entlang einer ersten Raumrichtung (x) ausgestaltet ist und das erste und zweite Fernfeldsegment (5a,5b) entlang der ersten Raumrichtung auseinanderfächern.

4. Fernlichtscheinwerfer gemäß Anspruch 3, bei dem das eintrittsseitige Wabenlinsenarray (3) des Wabenkondensors sich in einer zu der ersten Raumrichtung (x) senkrechten zweiten Richtung (y) erstreckende eintrittsseitige Wabenlinsenspalten aufweist, die in der ersten Raumrichtung (x) zueinander mit einem Wiederholabstand (Δx) äquidistant zueinander angeordnet sind, und das austrittsseitige Wabenlinsenarray (4) des Wabenkondensors sich in einer zu der ersten Raumrichtung senkrechten zweiten Richtung (y) erstreckende austrittsseitige Wabenlinsenspalten aufweist, die in der ersten Raumrichtung (x) zueinander mit dem Wiederholabstand (Δx) äquidistant zueinander und zu den austrittseitigen Wabenlinsenspalten so, dass durch jedes der eintrittsseitigen Wabenlinsenspalten das kollimierte Licht der ersten Lichtquelle (1a) in ein zugeordnetes der austrittseitigen Wabenlinsenspalten gebündelt wird, angeordnet sind.

5. Fernlichtscheinwerfer gemäß Anspruch 4, bei dem eintrittsseitige Wabenlinsen einer vorbestimmten eintrittsseitigen Wabenlinsenspalte von austrittsseitigen Wabenlinsen der der vorbestimmten eintrittsseitigen Wabenlinsenspalte zugeordneten austrittseitigen Wabenlinsenspalte hinsichtlich Anordnung von Linsenöffnungen und/oder Linsenscheiteln entlang der zweiten Raumrichtung (y) abweichen.

6. Fernlichtscheinwerfer gemäß Anspruch 4, bei dem eintrittsseitige Wabenlinsen einer vorbestimmten eintrittsseitigen Wabenlinsenspalte von austrittsseitigen Wabenlinsen der der vorbestimmten eintrittsseitigen Wabenlinsenspalte zugeordneten austrittseitigen Wabenlinsenspalte hinsichtlich Anordnung von Linsenöffnungen und/oder Linsenscheiteln entlang der zweiten Raumrichtung (y) derart abweichen, dass eine Lichtstärkeverteilung, mit welcher das erste Fernlichtsegment (5a) über die eintrittsseitigen Wabenlinsen der vorbestimmten eintrittsseitigen Wabenlinsenspalte und die austrittsseitigen Wabenlinsen der der vorbestimmten eintrittsseitigen Wabenlinsenspalte zugeordneten austrittseitigen Wabenlinsenspalte durch das kollimierte Licht der ersten Lichtquelle (1a) ausgeleuchtet wird, in der zweiten Raumrichtung (y) eine breitere Winkelverteilung aufweist als in einem Fall einer Angleichung der eintrittsseitigen Wabenlinsen der vorbestimmten eintrittsseitigen Wabenlinsenspalte an die der austrittsseitigen Wabenlinsen der der vorbestimmten eintrittsseitigen Wabenlinsenspalte zugeordneten austrittseitigen Wabenlinsenspalte hinsichtlich der Anordnung von Linsenöffnungen und Linsenscheiteln.

7. Fernlichtscheinwerfer nach Anspruch 5 oder 6, bei dem die austrittsseitigen Wabenlinsen der der vorbestimmten eintrittsseitigen Wabenlinsenspalte zugeordneten austrittseitigen Wabenlinsenspalte untereinander kongruente Linsenöffnungen, die gegenseitig äquidistant angeordnet sind, aufweisen.

8. Fernlichtscheinwerfer nach einem der Ansprüche 5 bis 7, bei dem die austrittsseitigen Wabenlinsen der vorbestimmten austrittsseitigen Wabenlinsenspalte untereinander kongruente Linsenöffnungen, die gegenseitig äquidistant angeordnet sind, und jeweils zentrierte Linsenscheitel aufweisen.

9. Fernlichtscheinwerfer nach einem der Ansprüche 5 bis 8, bei dem zumindest eine der eintrittsseitigen Wabenlinsen der vorbestimmten eintrittsseitigen Wabenlinsenspalte und/oder austrittsseitigen Wabenlinsen der der vorbestimmten eintrittsseitigen Wabenlinsenspalte zugeordneten austrittseitigen Wabenlinsenspalte einen zu ihrer Linsenöffnung entlang der zweiten Richtung (y) dezentrierten Linsenscheitel aufweist.

10. Fernlichtscheinwerfer gemäß einem der vorhergehenden Ansprüche, bei dem das kollimierte Licht einer vorbestimmten zweiten Lichtquelle (1b) den Wabenkondensor mit einer unter der zumindest einen zweiten Lichtquelle maximalen Übersprechordnung durchläuft, und
die eintrittsseitigen Wabenlinsen des eintrittsseitigen Wabenlinsenarrays (3) des Wabenkondensors gegenüber einer Ebene, in welcher die austrittseitigen Wabenlinsen des austrittsseitigen Wabenlinsenarrays (4) des Wabenkondensors angeordnet sind, für das kollimierte Licht der ersten Lichtquelle defokussierter angeordnet sind als für kollimiertes Licht mit einer Kollimationsrichtung zwischen derjenigen des kollimierten Lichts der ersten Lichtquelle und derjenigen des kollimierten Lichts der vorbestimmten zweiten Lichtquelle (1b).

11. Fernlichtscheinwerfer gemäß einem der vorhergehenden Ansprüche, bei dem der Kollimator (2) zur Verbesserung der Kollimation des kollimierten Lichts der zumindest einen zweiten Lichtquelle (1b) gegenüber einer sphärischen Ausgestaltung asphärisch ausgebildet ist.

12. Fernlichtscheinwerfer gemäß einem der vorhergehenden Ansprüche, mit einer Feldlinse, die mit dem Kollimator (2) zusammenwirkt, um den Wabenkondensor mit dem kollimierten Licht der Mehrzahl von Lichtquellen auszuleuchten.

13. Fernlichtscheinwerfer gemäß einem der vorhergehenden Ansprüche, bei dem der Wabenkondensor als monolithisches Tandemarray ausgebildet ist.

14. Fernlichtscheinwerfer gemäß einem der vorhergehenden Ansprüche, das blendfrei ausgebildet ist.

15. Fernlichtscheinwerfer gemäß einem der vorhergehenden Ansprüche, das zur Verwendung in einem Kraftfahrzeug vorgesehen ist.

16. Kraftfahrzeug mit einem Fernlichtscheinwerfer gemäß einem der vorhergehenden Ansprüche.

## Claims

1. A high beam headlights comprising
a light source array (1) with a plurality of light sources (1a, 1b, 1c);
a honeycomb condenser (10) comprising an entry-side and an exit-side honeycomb lens array (3, 4);
a collimator (2) connected between the honeycomb condenser and the light source array for illuminating the honeycomb condenser with respective collimated light of the plurality of light sources,
wherein the light source array comprises a first light source (1a) and at least one second light source (1b),
wherein each entry-side honeycomb lens of the entry-side honeycomb lens array (3) of the honeycomb condenser comprises an associated exit-side honeycomb lens of the exit-side honeycomb lens array (3) of the honeycomb condenser into which the collimated light of the first light source (1a) is collimated by the respective entry-side honeycomb lens, to form together a channel of the honeycomb condenser, **characterized in that**
for each of the at least one second light source, the collimated light of the respective second light source (1b) is collimated by the entry-side honeycomb lens array (3) of the honeycomb condenser into the exit-side honeycomb lenses of the exit-side honeycomb lens array (3) in a channel-crosstalk manner, such that the collimated light of the first light source (1a) of the light source array (1) leads to crosstalk-free irradiation of the honeycomb condenser and illumination of a first far-field segment (5a) and for each of the at least one second light source (1b), the collimated light of the respective second light source (1b) leads to irradiation of the honeycomb condenser with channel crosstalk and illumination of a second far-field segment (5b) oriented obliquely to the first far-field segment (5a).

2. The high beam headlights according to claim 1, wherein the light sources of the light source array (1) are controllable individually or in subgroups.

3. The high beam headlights according to claim 1, wherein the light source array (1) is configured as a one-dimensional light source array along a first spatial direction (x) and the first and second far-field segments (5a,5b) fan out along the first spatial direction.

4. The high beam headlights according to claim 3, wherein the entry-side honeycomb lens array (3) of the honeycomb condenser comprises entry-side honeycomb lens columns extending in a second direction (y) perpendicular to the first spatial direction (x), which are arranged equidistantly to each other in the first spatial direction (x) at a repetition distance (Δ x), and the exit-side honeycomb lens array (4) of the honeycomb condenser comprises exit-side honeycomb lens columns extending in a second direction (y) perpendicular to the first spatial direction, the exit-side honeycomb lens columns being arranged equidistantly to each other in the first spatial direction (x) at the repetition distance (Δ x) and to the exit-side honeycomb lens columns such that the collimated light of the first light source (1a) is collimated into an associated one of the exit-side honeycomb lens columns through each of the entry-side honeycomb lens columns.

5. The high beam headlights according to claim 4, wherein entry-side honeycomb lenses of a predetermined entry-side honeycomb lens column differ from exit-side honeycomb lenses of the exit-side honeycomb lens column associated with the predetermined entry-side honeycomb lens column with respect to arrangement of lens apertures and/or lens vertices along the second spatial direction (y).

6. The high beam headlights according to claim 4, wherein entry-side honeycomb lenses of a predetermined entry-side honeycomb lens column differ from exit-side honeycomb lenses of the exit-side honeycomb lens column associated with the predetermined entry-side honeycomb lens column with respect to arrangement of lens apertures and/or lens vertices along the second spatial direction (y) such that a luminous intensity distribution, with which the first high beam segment (5a) is illuminated via the entry-side honeycomb lenses of the predetermined entry-side honeycomb lens column and the exit-side honeycomb lenses of the exit-side honeycomb lens column associated with the predetermined entry-side honeycomb lens column by the collimated light of the first light source (1a), comprises a wider angular distribution in the second spatial direction (y) than in a case of matching the entry-side honeycomb lenses of the predetermined entry-side honeycomb lens column to the exit-side honeycomb lenses of the exit-side honeycomb lens column associated with the predetermined entry-side honeycomb lens column with respect to the arrangement of lens apertures and lens vertices.

7. The high beam headlights according to claim 5 or 6, wherein the exit-side honeycomb lenses of the exit-side honeycomb lens column associated with the predetermined entry-side honeycomb lens column comprise mutually congruent lens apertures which are arranged equidistantly to each other.

8. The high beam headlights according to any one of claims 5 to 7, wherein the exit-side honeycomb lenses of the predetermined exit-side honeycomb lens column comprise mutually congruent lens apertures which are arranged equidistantly to each other, and each comprise centered lens vertices.

9. The high beam headlights according to any one of claims 5 to 8, wherein at least one of the entry-side honeycomb lenses of the predetermined entry-side honeycomb lens column and/or exit-side honeycomb lenses of the exit-side honeycomb lens column associated with the predetermined entry-side honeycomb lens column comprises a lens vertex decentered with respect to its lens aperture along the second direction (y).

10. The high beam headlights according to any one of the preceding claims, wherein
the collimated light of a predetermined second light source (1b) passes through the honeycomb condenser with a crosstalk order that is at a maximum under the at least one second light source, and
the entry-side honeycomb lenses of the entry-side honeycomb lens array (3) of the honeycomb condenser are arranged, with respect to a plane in which the exit-side honeycomb lenses of the exit-side honeycomb lens array (4) of the honeycomb condenser are arranged, in a more defocused manner for the collimated light of the first light source than for collimated light with a collimation direction between that of the collimated light of the first light source and that of the collimated light of the predetermined second light source (1b).

11. The high beam headlights according to any one of the preceding claims, wherein the collimator (2) is configured in an aspherical manner to improve the collimation of the collimated light of the at least one second light source (1b) compared to a spherical configuration.

12. The high beam headlights according to any one of the preceding claims, comprising a field lens cooperating with the collimator (2) to illuminate the honeycomb condenser with the collimated light of the plurality of light sources.

13. The high beam headlights according to any one of the preceding claims, wherein the honeycomb condenser is configured as a monolithic tandem array.

14. The high beam headlights according to any one of the preceding claims, which is configured to be dazzle-free.

15. The high beam headlights according to any one of the preceding claims, which is intended for use in a motor vehicle.

16. A motor vehicle comprising high beam headlights according to any one of the preceding claims.

## Revendications

1. Projecteur de feu de route, avec
un réseau de sources de lumière (1) avec une pluralité de sources de lumière (1a, 1b, 1c);
un condenseur en nid d'abeille (10) présentant un réseau de lentilles en nid d'abeille du côté de l'entrée et du côté de la sortie (3, 4);
un collimateur (2) qui est connecté entre le condenseur en nid d'abeille et le réseau de sources de lumière, destiné à éclairer le condenseur en nid d'abeille par de la lumière collimatée respective provenant de la pluralité de sources de lumière,
dans lequel le réseau de sources de lumière présente une première source de lumière (1a) et au moins une deuxième source de lumière (1b),
dans lequel est associée à chaque lentille en nid d'abeille du côté de l'entrée du réseau de lentilles en nid d'abeille du côté de l'entrée (3) du condenseur en nid d'abeille une lentille en nid d'abeille du côté de la sortie du réseau de lentilles en nid d'abeille du côté de la sortie (4) du condenseur en nid d'abeille dans laquelle est concentrée la lumière collimatée de la première source de lumière (1a) par la lentille en nid d'abeille du côté de l'entrée respective pour former ensemble un canal du condenseur en nid d'abeille, **caractérisé par le fait que** pour chacune des au moins une deuxième source de lumière, la lumière collimatée de la deuxième source de lumière respective (1b) est concentrée par le réseau de lentilles en nid d'abeille du côté de l'entrée (3) du condenseur en nid d'abeille en diaphonie de canal dans les lentilles en nid d'abeille du côté de la sortie du réseau de lentilles en nid d'abeille du côté de la sortie (3), de sorte que la lumière collimatée de la première source de lumière (1a) du réseau de sources de lumière (1) conduise à une transmission de lumière sans diaphonie du condenseur en nid d'abeille et à une illumination d'un premier segment de champ lointain (5a) et que, pour chacune des au moins une deuxième source de lumière (1b), la lumière collimatée de la deuxième source de lumière respective (1b) conduise à une transmission de lumière du condenseur en nid d'abeille avec diaphonie de canal et un éclairage d'un deuxième segment de champ lointain (5b) orienté obliquement par rapport au premier segment de champ lointain (5a).

2. Projecteur de feu de route selon la revendication 1, dans lequel les sources de lumière du réseau de sources de lumière (1) peuvent être commandées individuellement ou par sous-groupes.

3. Projecteur de feu de route selon la revendication 1, dans lequel le réseau de sources de lumière (1) est conçu comme un réseau de sources de lumière unidimensionnel dans une première direction spatiale (x) et le premier et le deuxième segment de champ lointain (5a, 5b) divergent dans la première direction spatiale.

4. Projecteur de feu de route selon la revendication 3, dans lequel le réseau de lentilles en nid d'abeille du côté de l'entrée (3) du condenseur en nid d'abeille présente des colonnes de lentilles en nid d'abeille du côté de l'entrée s'étendant dans une deuxième direction (y) perpendiculaire à la première direction spatiale (x) qui sont disposées de manière équidistante entre elles dans la première direction spatiale (x) avec une distance de répétition (Δx), et le réseau de lentilles en nid d'abeille du côté de la sortie (4) du condenseur en nid d'abeille présente des colonnes de lentilles en nid d'abeille du côté de la sortie s'étendant dans une deuxième direction perpendiculaire à la première direction spatiale (y) qui sont disposées de manière équidistante entre elles dans la première direction spatiale (x) avec la distance de répétition (Δx) et par rapport aux colonnes de lentilles en nid d'abeille du côté de la sortie, de sorte qu'à travers chacune des colonnes de lentilles en nid d'abeille du côté de l'entrée soit concentrée la lumière collimatée de la première source de lumière (1a) dans l'une associée des colonnes de lentilles en nid d'abeille du côté de la sortie.

5. Projecteur de feu de route selon la revendication 4, dans lequel les lentilles en nid d'abeille du côté de l'entrée d'une colonne de lentilles en nid d'abeille du côté de l'entrée prédéterminée diffèrent des lentilles en nid d'abeille du côté de la sortie de la colonne de lentilles en nid d'abeille du côté de la sortie associée à la colonne de lentilles en nid d'abeille du côté de l'entrée prédéterminée en ce qui concerne la disposition des ouvertures de lentille et/ou des sommets de lentille dans la deuxième direction spatiale (y).

6. Projecteur de feu de route selon la revendication 4, dans lequel les lentilles en nid d'abeille du côté de l'entrée d'une colonne de lentilles en nid d'abeille du côté de l'entrée prédéterminée diffèrent des lentilles en nid d'abeille du côté de la sortie de la colonne de lentilles en nid d'abeille du côté de la sortie associée à la colonne de lentilles en nid d'abeille du côté de l'entrée prédéterminée en ce qui concerne la disposition des ouvertures de lentille et/ou des sommets de lentille dans la deuxième direction spatiale (y), de sorte qu'une distribution d'intensité lumineuse avec laquelle le premier segment de feu de route (5a) est éclairé, par l'intermédiaire des lentilles en nid d'abeille du côté de l'entrée de la colonne de lentilles en nid d'abeille du côté de l'entrée prédéterminée et des lentilles en nid d'abeille du côté de la sortie de la colonne de lentilles en nid d'abeille du côté de la sortie associée à la colonne de lentilles en nid d'abeille du côté de l'entrée prédéterminée, par la lumière collimatée de la première source de lumière (1a) présente, dans la deuxième direction spatiale (y), une distribution angulaire plus large que dans un cas d'approximation des lentilles en nid d'abeille du côté de l'entrée de la colonne de lentilles en nid d'abeille du côté de l'entrée prédéterminée à celle des lentilles en nid d'abeille du côté de la sortie de la colonne de lentilles en nid d'abeille du côté de la sortie associée à la colonne de lentilles en nid d'abeille du côté de l'entrée prédéterminée en ce qui concerne la disposition des ouvertures de lentille et des sommets de lentille.

7. Projecteur de feu de route selon la revendication 5 ou 6, dans lequel les lentilles en nid d'abeille du côté de la sortie de la colonne de lentilles en nid d'abeille du côté de la sortie associée à la colonne de lentilles en nid d'abeille du côté de l'entrée prédéterminée présentent des ouvertures de lentille congruentes entre elles qui sont disposées de manière équidistante entre elles.

8. Projecteur de feu de route selon l'une des revendications 5 à 7, dans lequel les lentilles en nid d'abeille du côté de la sortie de la colonne de lentilles en nid d'abeille du côté de la sortie prédéterminée présentent des ouvertures de lentille congruentes entre elles qui sont disposées de manière équidistante entre elles et présentent, chacune, des sommets de lentille centrés.

9. Projecteur de feu de route selon l'une des revendications 5 à 8, dans lequel au moins une des lentilles en nid d'abeille du côté de l'entrée de la colonne de lentilles en nid d'abeille du côté de l'entrée prédéterminée et/ou des lentilles en nid d'abeille du côté de la colonne de lentilles en nid d'abeille du côté de la sortie associée à la colonne de lentilles en nid d'abeille du côté de l'entrée prédéterminée présente un sommet de lentille décentré par rapport à son ouverture de lentille dans la deuxième direction (y).

10. Projecteur de feu de route selon l'une des revendications précédentes, dans lequel
la lumière collimatée d'une deuxième source de lumière prédéterminée (1b) traverse le condenseur en nid d'abeille selon un ordre de diaphonie maximum parmi les au moins une deuxième source de lumière, et
les lentilles en nid d'abeille du côté de l'entrée du réseau de lentilles en nid d'abeille du côté de l'entrée (3) du condenseur en nid d'abeille sont disposées plus défocalisées par rapport à un plan dans lequel les lentilles en nid d'abeille du côté de la sortie du réseau de lentilles en nid d'abeille du côté de la sortie (4) du condenseur en nid d'abeille pour la lumière collimatée de la première source de lumière que pour la lumière collimatée avec une direction de collimation entre celle de la lumière collimatée de la première source de lumière et celle de la lumière collimatée de la deuxième source de lumière prédéterminée (1b).

11. Projecteur de feu de route selon l'une des revendications précédentes, dans lequel le collimateur (2) est, pour améliorer la collimation de la lumière collimatée des au moins une deuxième source de lumière (1b), conçu asphérique par rapport à une configuration sphérique.

12. Projecteur de feu de route selon l'une des revendications précédentes, avec une lentille de champ qui coopère avec le collimateur (2) pour éclairer le condenseur en nid d'abeille par la lumière collimatée de la pluralité de sources de lumière.

13. Projecteur de feu de route selon l'une des revendications précédentes, dans lequel le condenseur en nid d'abeille est conçu comme un réseau tandem monolithique.

14. Projecteur de feu de route selon l'une des revendications précédentes, qui est conçu anti-éblouissant.

15. Projecteur de feu de route selon l'une des revendications précédentes, qui est prévu pour être utilisé dans un véhicule automobile.

16. Véhicule automobile avec un projecteur de feu de route selon l'une des revendications précédentes.
